# NEUE EUROPÄISCHE PATENTSCHRIFT

(11) **EP 1 323 563 B2**
(45) Veröffentlichungstag und Bekanntmachung des Hinweises auf die Entscheidung über den Einspruch: **22.07.2015**
(45) Hinweis auf die Patenterteilung: 11.05.2005
(21) Anmeldenummer: 02027315.7
(22) Anmeldetag: 06.12.2002
(51) Int. Cl.: B60J 10/12

(54) **Dichtungsanordnung zwischen einem bewegbaren Schiebedeckel und einem Flansch**
Sealing arrangement between a sliding cover and a flange
Arrangement d'un joint d'étanchéité entre un couvercle coulissant et une bride

(30) Priorität: 19.12.2001 DE 10162562
(43) Veröffentlichungstag der Anmeldung: 02.07.2003
(73) Patentinhaber: Cooper Standard GmbH, 88131 Lindau (DE)
(72) Erfinder: Thal, Andreas, 6850 Dornbirn (AT)
(74) Vertreter: Flügel Preissner Kastel Schober

(56) Entgegenhaltungen:
- EP-A- 0 615 875
- EP-A1- 0 747 252
- DE-A- 10 035 958
- DE-A1- 3 642 470
- DE-A1- 3 729 180
- DE-A1- 10 005 642
- DE-C- 19 707 145
- DE-C- 19 754 403
- DE-C- 19 942 037
- DE-C2- 3 640 168
- JP-A- H0 858 393
- JP-A- H01 132 421
- JP-A- S63 222 924

## Beschreibung

Die Erfindung betrifft eine Dichtungsanordnung zum Abdichten eines Spalts zwischen einem bewegbaren Schiebedeckel und einem den Schiebedeckel zumindest bereichsweise umgebenden Flansch, insbesondere im Bereich des Dachs eines Kraftfahrzeugs. Die Dichtungsanordnung ist mit einem aus einem elastischen Material gefertigten Dichtungsprofil versehen, das einen Befestigungsabschnitt und einen Dichtungsabschnitt aufweist. Das Dichtungsprofil ist im Bereich des Befestigungsabschnitts an dem Schiebedeckel befestigt und im Bereich des Dichtungsabschnitts an den Flansch anlegbar. Weiterhin ist der Dichtungsabschnitt mit einer kompressiblen Hohlkammer versehen. Eine Anordnung dieser Art ist in DE 197 07 145 offenbart

Eine derartige Dichtungsanordnung wird in der DE 100 05 642 A1 beschrieben. Die bekannte Dichtungsanordnung dient zum Abdichten des Schiebedachs eines Kraftfahrzeugs. Zu diesen Zweck ist ein Dichtungsprofil vorgesehen, das einen Dichtungsabschnitt und einen Befestigungsabschnitt aufweist. Das Dichtungsprofil ist mittels des Befestigungsabschnitts an einem das Schiebedach bildenden Schiebedeckel befestigt. Der aufgrund einer kompressiblen Hohlkammer verformbare Dichtungsabschnitt dichtet den Schiebedeckel gegenüber einem diesem gegenüberliegenden Flansch des Fahrzeugdachs ab.

Darüber hinaus offenbart DE 36 42 470 A eine Dichtungsanordnung zum Abdichten eines Spalts zwischen einem bewegbaren Schiebedeckel und einem den Schiebedeckel zumindest bereichsweise umgebenden Flansch im Bereich des Dachs eines Kraftfahrzeugs. Die Dichtungsanordnung umfasst einen bewegbaren Schiebedeckel, einen den Schiebedeckel zumindest bereichsweise umgebenden Flansch im Bereich des Dachs eines Kraftfahrzeugs, einen Steg und ein aus einem elastischen Material gefertigtes Dichtungsprofil. Das einen Befestigungsabschnitt und einen Dichtungsabschnitt aufweisende Dichtungsprofil ist im Bereich des Befestigungsabschnitts an dem Schiebedeckel befestigt und im Bereich des Dichtungsabschnitts an den Flansch anlegbar. Durch den Dichtungsabschnitt wird eine kompressible Hohlkammer gebildet, die in einem am Flansch anliegenden Zustand des Dichtungsabschnitts im Querschnitt annähernd viereckförmig ausgebildet und bei einer Relativbewegung von Schiebedeckel und Flansch in Art eines Parallelogramms verformbar ist. Der Steg ist zum wenigstens teilweisen Abdecken des Dichtungsabschnitts sich in den Spalt zwischen dem Flansch und dem Schiebdeckel erstreckend angeordnet.

Eine Relativbewegung von Schiebedeckel und Flansch, etwa beim Bewegen des Schiebedeckels in eine Kippstellung, kann zu einer stellenweise auftretenden Deformation des Dichtungsprofils führen. Um eine solche, in ästhetischer Hinsicht im allgemeinen unerwünschte Deformation des Dichtungsprofils zu vermeiden, ist der Dichtungsabschnitt der bekannten Dichtungsanordnung bereichsweise verdickt, so daß an der Innenfläche der Hohlkammer ein Wulst entsteht. Der Wulst verursacht eine gezielte Kompression der Hohlkammer, die eine Deformation des Dichtungsprofils verhindert.

Neben einer beabsichtigten Relativbewegung von Schiebedeckel und Flansch, etwa beim Öffnen des Schiebedachs, ergeben sich aufgrund der während der Fahrt eines Kraftfahrzeugs unvermeidlich auftretenden Schwingungen unbeabsichtigte Relativbewegungen von Schiebedeckel und Flansch, deren Länge in der Regel zwar nur einige Zehntel Millimeter beträgt, die aber zu einer störenden Geräuschbildung führen kann. Besonders vehement können sich diese sogenannten Knarzgeräusche dann zeigen, wenn zwischen dem Dichtungsabschnitt und dem Flansch ein geringer Reibungswiderstand vorhanden ist. Denn der geringe Reibungswiderstand ermöglicht zwar ein verhältnismäßig geräuscharmes Öffnen und Schließen des Schiebedachs, verstärkt zugleich aber die aufgrund der Schwingungen während der Fahrt hervorgerufenen Relativbewegungen von Schiebedeckel beziehungsweise Dichtungsabschnitt und Flansch und damit die Knarzgeräusche.

Der Erfindung liegt die **Aufgabe** zugrunde, eine Dichtungsanordnung der eingangs genannten Art dahingehend weiterzubilden, daß sich bei einem in ästhetischer Hinsicht ansprechenden Erscheinungsbild eine unerwünschte Geräuschbildung vermeiden läßt.

Diese Aufgabe wird durch eine Dichtungsanordnung gemäß Anspruch 1 gelöst.

Eine solchermaßen ausgebildete Dichtungsanordnung macht sich die Erkenntnis zu eigen, daß sich aufgrund der im Querschnitt annähernd viereckförmigen Ausbildung der Hohlkammer in dem am Schiebedeckel anliegenden Zustand des Dichtungsabschnitts eine vergleichsweise große Haftreibungskraft zwischen Dichtungsabschnitt und Flansch ergibt. Diese Haftreibungskraft ist größer als eine zum Verformen des Dichtungsabschnitts erforderliche Formänderungskraft, so daß sich die Hohlkammer bei einer Relativbewegung von Dichtungsprofil und Schiebedeckel in Art eines Parallelogramms verformt. Auf diese Weise wirkt die Haftreibungskraft einer Relativbewegung zwischen Dichtungsabschnitt und Flansch aufgrund der während der Fahrt eines Kraftfahrzeugs auftretenden Schwingungen entgegen und vermeidet somit eine störende Geräuschbildung in Form von Knarzgeräuschen. Um die aufgrund der erhöhten Haftreibungskraft unvermeidliche Deformation des Dichtungsprofils beim Öffnen und Schließen des Schiebedeckels zu kaschieren, ist der Steg vorgesehen, der den Dichtungsabschnitt weitgehend verdeckt. Im Unterschied zum oben genannten Stand der Technik wird bei der erfindungsgemäßen Dichtungsanordnung eine Deformation des Dichtungsprofils gerade nicht vermieden, sondern ausgenutzt, um eine unerwünschte Geräuschbildung zu verhindern.

Vorteilhafte Ausgestaltungen der erfindungsgemäßen Dichtungsanordnung stellen die Gegenstände der Unteransprüche dar.

So ist es in Hinsicht auf das optische Erscheinungsbild von besonderem Vorteil, wenn der Dichtungsabschnitt durch den Steg nahezu vollständig abgedeckt ist. Um eine einfache Fertigung sicherzustellen, ist es ferner von Vorteil, den Steg an dem Dichtungsprofil auszubilden. Zu diesem Zweck können der Steg und das Dichtungsprofil beispielsweise koextrudiert werden. In einer alternativen Ausgestaltung der erfindungsgemäßen Dichtungsanordnung ist der Steg an dem Schiebedeckel ausgebildet. Dies bietet sich etwa dann an, wenn der Schiebedeckel eine aus Kunststoff bestehende Umrandung aufweist, so daß sich der Steg ohne weiteres zusammen mit der Umrandung fertigen läßt, beispielsweise durch Spritzgießen.

Einer bevorzugten Ausgestaltung der erfindungsgemäßen Dichtungsanordnung entsprechend ist der Steg aus Kunststoff gefertigt und vorzugsweise mit einer Armierung versehen. Die Armierung stellt eine ausreichende Festigkeit des Stegs sicher und ermöglicht somit, den Steg aus einem elastischen Material zu fertigen.

Bevorzugt ist der Dichtungsabschnitt an einer dem Flansch zugewandten Außenfläche mit einer reibungserhöhenden Beschichtung versehen. Auf diese Weise wird die zwischen dem Dichtungsabschnitt und dem Flansch auftretende Haftreibungskraft zusätzlich erhöht und eine unerwünschte Geräuschbildung in Form von Knarzgeräuschen damit zuverlässig vermieden.

Dagegen ist der Steg an einer dem Flansch zugewandten Außenfläche vorteilhafterweise mit einer reibungsvermindernden Beschichtung, vorzugsweise einem Gleitlack, versehen. Eine solche Ausgestaltung bietet den Vorteil, daß eine die Dichtungswirkung des Dichtungsprofils beeinträchtigende Haftreibung zwischen Steg und Flansch vermieden wird. Alternativ kann in vorteilhafter Weiterbildung der erfindungsgemäßen Dichtungsanordnung der Abstand zwischen dem Steg und dem Flansch so bemessen sein, daß eine Berührung von Steg und Flansch bei einer Relativbewegung der zuvor Genannten unterbleibt. Auch in diesem Fall ist sichergestellt, daß die Dichtungswirkung des Dichtungsprofils nicht durch eine Haftreibung zwischen Steg und Flansch beeinträchtigt wird.

Als vorteilhaft hat es sich weiterhin erwiesen, wenn der Befestigungsabschnitt eine höhere Härte aufweist als der Dichtungsabschnitt. Die höhere Härte des Befestigungsabschnitts trägt zu einer zuverlässigen Befestigung des Dichtungsprofils an dem Schiebedeckel bei. Um eine verläßliche Dichtungswirkung und gute Verformbarkeit zu gewährleisten, ist der Dichtungsabschnitt bevorzugt aus Moosgummi gefertigt. Der Befestigungsabschnitt hingegen ist in Hinsicht auf eine sichere Befestigung des Dichtungsprofils an dem Schiebedeckel aus Polyamid (PA), Polypropylen (PP), Polyvinylchlorid (PVC) oder Ethylen-Propylen-Kautschuk (EPDM) gefertigt.

Schließlich wird in Weiterbildung der erfindungsgemäßen Dichtungsanordnung vorgeschlagen, den Befestigungsabschnitt stoffschlüssig, vorzugsweise mittels Kleben, und/oder kraftschlüssig, vorzugsweise mittels Verrasten, an dem Schiebedeckel zu befestigen. Eine stoffschlüssige Verbindung läßt sich besonders einfach dadurch realisieren, daß ein Klebestreifen zwischen Befestigungsabschnitt und Schiebedeckel angeordnet wird. Zudem kann durch eine Kombination von stoffschlüssiger und kraftschlüssiger Verbindung die Haltekraft erhöht werden. Ein einfach zu realisierender Kraftschluß ergibt sich dann, wenn der Befestigungsabschnitt und der Schiebedeckel miteinander verrastet werden.

Einzelheiten und weitere Vorteile der vorliegenden Erfindung ergeben sich aus der nachfolgenden Beschreibung eines bevorzugten Ausführungsbeispieles. In den zugehörigen Zeichnungen, die das Ausführungsbeispiel lediglich schematisch darstellen, zeigen im einzelnen:
- Fig. 1a: einen Querschnitt durch eine Dichtungsanordnung mit einem sich frei erstreckenden Dichtungsabschnitt;
- Fig. 1b: einen Querschnitt durch eine alternative Ausführungsform der Dichtungsanordnung gemäß Fig. 1 a;
- Fig. 2: eine Dichtungsanordnung gemäß Fig. 1a mit dem an einem Flansch anliegenden Dichtungsabschnitt und
- Fig. 3: einen Querschnitt durch die Dichtungsanordnung gemäß Fig. 2 bei einem relativ zu dem Flansch verschobenen Schiebedeckel.

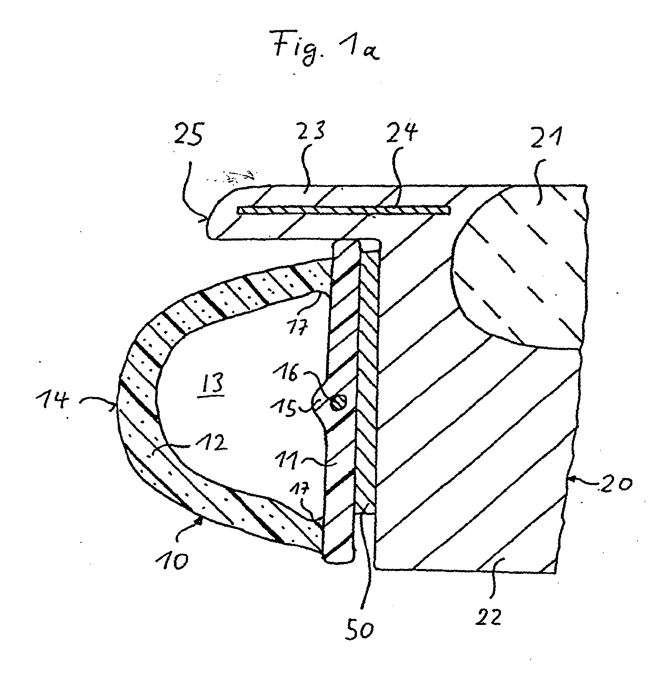

Die in den Fig. 1a bis 3 dargestellte Dichtungsanordnung dient zum Abdichten eines Spalts 40 zwischen einem bewegbaren Schiebedeckel 20 und einem Flansch 30, der auf zwei gegenüberliegenden Seiten des Schiebedeckels 20 in dem Bereich des Dachs eines Kraftfahrzeugs angeordnet ist. Der ein Schiebedach bildende Schiebedeckel 20 weist eine Glasscheibe 21 auf, die von einer aus Polyurethan bestehenden Umrandung 22 umschlossen ist. Die beispielsweise mittels Spritzgießen an der Glasscheibe 21 angeordnete Umrandung 22 ist mit einem Steg 23 versehen, der sich in den Spalt 40 zwischen dem Flansch 30 und dem Schiebedeckel 20 erstreckt. Im Bereich des einstückig mit der Umrandung 22 gefertigten Stegs 23 ist eine Armierung 24 aus Stahl angeordnet. Der Abstand a zwischen einer dem Flansch 30 zugewandten Außenfläche 25 des Stegs 23 und dem Flansch 30 ist so bemessen, daß eine Berührung von Steg 23 und Flansch 30 bei einer Relativbewegung der zuvor Genannten unterbleibt. Der Abstand a ist verhältnismäßig gering, so daß der Spalt 40 durch den Steg 23 weitgehend abgedeckt wird. Um eine Haftreibung zwischen Steg 23 und Flansch 30 sicher auszuschließen, kann die Außenfläche 25 zusätzlich mit einer reibungsvermindernden Beschichtung, beispielsweise einem Gleitlack, versehen sein.

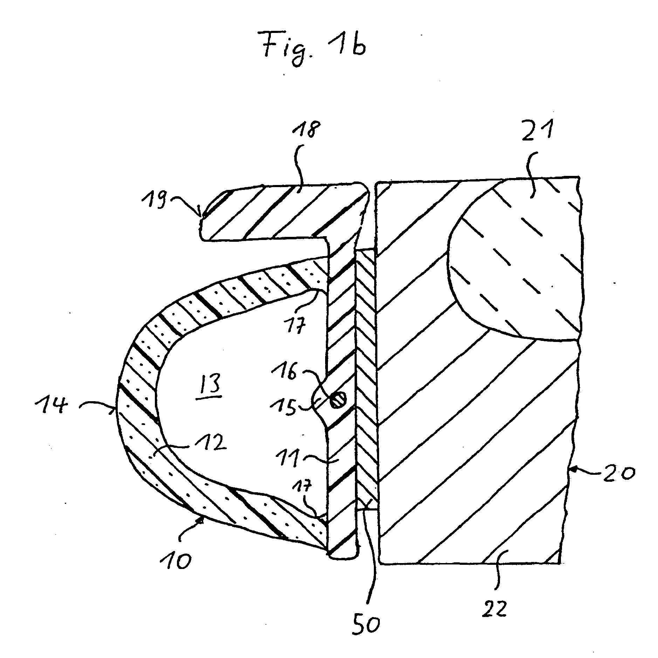

Die Dichtungsanordnung weist außerdem ein Dichtungsprofil 10 auf, das sich aus einem Befestigungsabschnitt 11 und einem Dichtungsabschnitt 12 zusammensetzt. Der Dichtungsabschnitt 12 ist aus Moosgummi gefertigt und bildet eine kompressible Hohlkammer 13 aus. Der Befestigungsabschnitt 11 besteht aus einem Material, das eine höhere Härte aufweist als das des Dichtungsabschnitts 12, beispielsweise Polyamid, und ist durch Koextrusion einstückig mit dem Dichtungsabschnitt 12 gefertigt. Wie aus Fig. 1b ersichtlich, kann der Befestigungsabschnitt 11 in einer alternativen Ausgestaltung der Dichtungsanordnung mit einem eine dem Flansch 30 zugewandte Außenfläche 19 aufweisenden Steg 18 versehen sein.

Der Befestigungsabschnitt 11 ist an der Umrandung 22 des Schiebedeckels 20 befestigt. Zu diesem Zweck ist zwischen dem Befestigungsabschnitt 11 und der Umrandung 22 ein Klebestreifen 50 angeordnet. Der Befestigungsabschnitt 11 weist im Bereich eines an der Innenfläche der Hohlkammer 13 ausgebildeten Vorsprungs 15 eine Armierung 16 aus Stahl oder Glasfasern auf, die den Befestigungsabschnitt 11 verstärkt. Der Vorsprung 15 dient zugleich dazu, ein vollständiges Zusammendrücken der Hohlkammer 13 zu verhindern. Auf diese Weise ist sichergestellt, daß die einander gegenüberliegenden Innenflächen der Hohlkammer 13 nach einer Kompression der Hohlkammer 13 nicht aneinander haften bleiben.

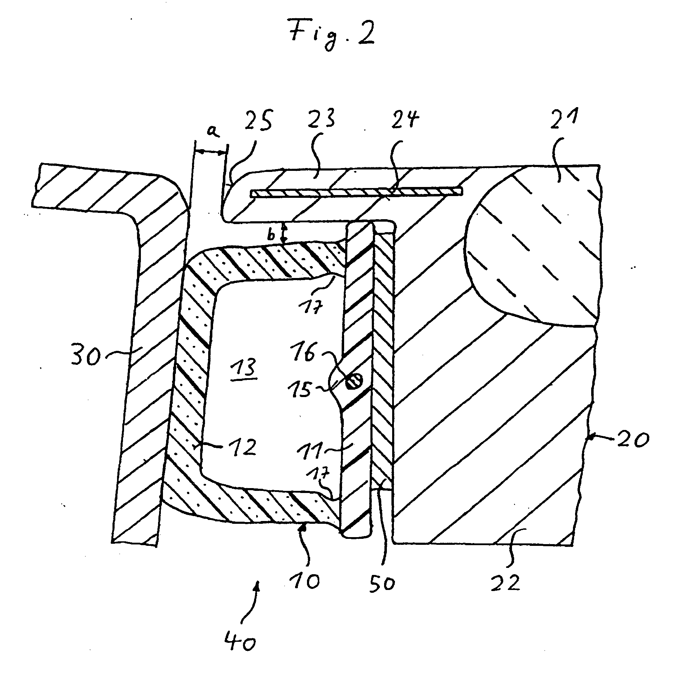

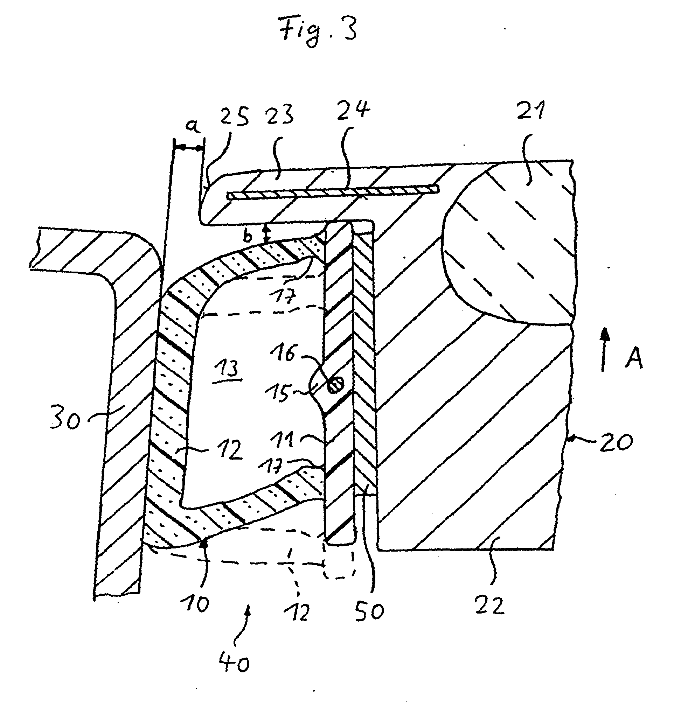

Wie die Fig. 2 und 3 erkennen lassen, ist die Hohlkammer 13 in dem am Flansch 30 anliegenden Zustand des Dichtungsabschnitts 12 im Querschnitt nicht mehr gewölbt, sondern annähernd viereckförmig, insbesondere rechteckförmig ausgebildet. Auf diese Weise ergibt sich eine vergleichsweise große Berührungsfläche zwischen dem Flansch 30 und einer diesem zugewandten Außenfläche 14 des Dichtungsabschnitts 12. Diese Berührungsfläche bewirkt eine verhältnismäßig große Haftreibungskraft, die noch dadurch gesteigert werden kann, daß die Außenfläche 14 mit einer reibungserhöhenden Beschichtung versehen wird.

Aufgrund der zwischen Dichtungsabschnitt 12 und Flansch 30 vorhandenen Haftreibungskraft bleibt die Außenfläche 14 bei einer Relativbewegung von Schiebedeckel 20 und Flansch 30 an dem letztgenannten haften. Dies hat zur Folge, daß sich die Hohlkammer 13 bei einer Relativbewegung von Schiebedeckel 20 und Flansch 30 in Art eines Parallelogramms verformt, wie in Fig. 3 bei einer Bewegung des Schiebedeckels 20 in Richtung des Pfeils A zu erkennen ist. Diese Verformung der Hohlkammer 13 wird durch Sollknickstellen 17 unterstützt, die am Übergang zwischen Dichtungsabschnitt 12 und Befestigungsabschnitt 11 an der Innenfläche der Hohlkammer 13 ausgebildet sind. Darüber hinaus ist der Abstand b zwischen dem Steg 23 und dem Dichtungsabschnitt 12 so bemessen, daß die Verformung der Hohlkammer 13 nicht behindert wird.

Die zuvor beschriebene Dichtungsanordnung zeichnet sich bei einem in ästhetischer Hinsicht ansprechenden Erscheinungsbild durch die Vermeidung einer unerwünschten Geräuschbildung in Form von Knarzgeräuschen aus. Grund hierfür ist, daß Relativbewegungen zwischen Schiebedeckel 20 und Flansch 30, die etwa durch Schwingungen während der Fahrt eines Kraftfahrzeugs hervorgerufen werden, zu einer parallelogrammartigen Verformung der Hohlkammer 13 führen. Eine Relativbewegung von Flansch 30 und dem an diesem anliegenden Dichtungsabschnitt 12, die im Stand der Technik für eine Geräuschbildung ursächlich ist, wird hingegen durch die Verformung der Hohlkammer 13 verhindert. Um ein in ästhetischen Hinsicht ansprechendes Erscheinungsbild zu wahren, verdeckt der Steg 23 nahezu vollständig den Dichtungsabschnitt 12. Eine aufgrund der Haftreibungskraft zwischen Dichtungsabschnitt 12 und Flansch 30 unvermeidliche Deformation des Dichtungsprofils 10, beispielsweise beim Bewegen des Schiebedeckels 20 in eine Kippstellung, wird somit kaschiert. Nicht zuletzt wird einer übermäßigen Deformation des Dichtungsprofils 10 wirksam dadurch begegnet, daß der Steg 23 zugleich einen Anschlag für das Dichtungsprofil 10 darstellt.

### Bezugszeichenliste

- 10: Dichtungsprofil
- 11: Befestigungsabschnitt
- 12: Dichtungsabschnitt
- 13: Hohlkammer
- 14: Außenfläche
- 15: Vorsprung
- 16: Armierung
- 17: Sollknickstelle
- 18: Steg
- 19: Außenfläche

- 20: Schiebedeckel
- 21: Glasscheibe
- 22: Umrandung
- 23: Steg
- 24: Armierung
- 25: Außenfläche

- 30: Flansch

- 40: Spalt

- 50: Klebestreifen

- a: Abstand
- b: Abstand

- A: Pfeil

## Patentansprüche

1. Dichtungsanordnung zum Abdichten eines Spalts (40) zwischen einem bewegbaren Schiebedeckel (20) und einem den Schiebedeckel (20) zumindest bereichsweise umgebenden Flansch (30) im Bereich des Dachs eines Kraftfahrzeugs, wobei die Dichtungsanordnung umfasst:
einen bewegbaren Schiebedeckel (20);
einen den Schiebedeckel (20) zumindest bereichsweise umgebenden Flansch (30) im Bereich des Dachs eines Kraftfahrzeugs;
einen Steg (18, 23) und
ein aus einem elastischen Material gefertigtes Dichtungsprofil (10), das einen Befestigungsabschnitt (11) und einen Dichtungsabschnitt (12) aufweist;
wobei das Dichtungsprofil (10) im Bereich des Befestigungsabschnitts (11) an dem Schiebedeckel (20) befestigt und im Bereich des Dichtungsabschnitts (12) an den Flansch (30) anlegbar ist;
wobei durch den Dichtungsabschnitt (12) eine kompressible Hohlkammer (13) gebildet ist;
wobei die Hohlkammer (13) in einem am Flansch (30) anliegenden Zustand des Dichtungsabschnitts (12) im Querschnitt annähernd viereckförmig ausgebildet und bei einer Relativbewegung von Schiebedeckel (20) und Flansch (30) in vertikaler Richtung in Art eines Parallelogramms verformbar ist;
wobei der Steg (18, 23) zum wenigstens teilweise Abdecken des Dichtungsabschnitts (12) sich in den Spalt (40) zwischen dem Flansch (30) und dem Schiebedeckel (20) erstreckend angeordnet ist;
wobei der Steg (18, 23) durch einen eine ungehinderte Verformung der Hohlkammer (13) ermöglichenden Abstand (b) von der Hohlkammer (13) getrennt ist und
wobei am Übergang zwischen dem Dichtungsabschnitt (12) und dem Befestigungsabschnitt (11) Sollknickstellen (17) an der Innenfläche der Hohlkammer (13) ausgebildet sind, welche die Verformung der Hohlkammer (13) bei einer Relativbewegung von Schiebedeckel (20) und Flansch (30) in vertikaler Richtung unterstützen.

2. Dichtungsanordnung nach Anspruch 1, **dadurch gekennzeichnet, dass** der Dichtungsabschnitt (12) durch den Steg (18, 23) nahezu vollständig abgedeckt ist.

3. Dichtungsanordnung nach Anspruch 1 oder 2, **dadurch gekennzeichnet, dass** der Steg (18) an dem Dichtungsprofil (10) ausgebildet ist.

4. Dichtungsanordnung nach Anspruch 1 oder 2, **dadurch gekennzeichnet, dass** der Steg (23) an dem Schiebedeckel (20) ausgebildet ist.

5. Dichtungsanordnung nach Anspruch 4, **dadurch gekennzeichnet, dass** der Steg (23) aus Kunststoff gefertigt und vorzugsweise mit einer Armierung (24) versehen ist.

6. Dichtungsanordnung nach einem der Ansprüche 1 bis 5, **dadurch gekennzeichnet, dass** der Dichtungsabschnitt (12) an einer dem Flansch (30) zugewandten Außenfläche (14) mit einer reibungserhöhenden Beschichtung versehen ist.

7. Dichtungsanordnung nach einem der Ansprüche 1 bis 6, **dadurch gekennzeichnet, dass** der Steg (18, 23) an einer dem Flansch (30) zugewandten Außenfläche (19, 25) mit einer reibungsvermindernden Beschichtung, vorzugsweise einem Gleitlack, versehen ist.

8. Dichtungsanordnung nach einem der Ansprüche 1 bis 7, **gekennzeichnet durch** einen Abstand (a) zwischen dem Steg (18, 23) und dem Flansch (30), der so bemessen ist, dass eine Berührung von Steg (18, 23) und Flansch (30) bei einer Relativbewegung derselben unterbleibt.

9. Dichtungsanordnung nach einem der Ansprüche 1 bis 8, **dadurch gekennzeichnet, dass** der Befestigungsabschnitt (11) eine höhere Härte aufweist als der Dichtungsabschnitt (12).

10. Dichtungsanordnung nach Anspruch 9, **dadurch gekennzeichnet, dass** der Dichtungsabschnitt (12) aus Moosgummi und der Befestigungsabschnitt (11) aus Polyamid, Polypropylen, Polyvinylchlorid oder Ethylen-Propylen-Kautschuk gefertigt ist.

11. Dichtungsanordnung nach einem der Ansprüche 1 bis 10, **dadurch gekennzeichnet, dass** der Befestigungsabschnitt (11) stoffschlüssig, vorzugsweise mittels Kleben, und/oder kraftschlüssig, vorzugsweise mittels Verrasten, an dem Schiebedeckel (20) befestigt ist.

## Claims

1. A weatherstrip assembly for sealing a gap (40) between a powered sunroof panel (20) and a flange (30) surrounding said sunroof panel (20) at least regionally in the region of a roof of a motor vehicle, including:
a powered sunroof panel (20),
a flange (30) surrounding said sunroof panel (20) at least regionally in the region of a roof of a motor vehicle,
a web (18, 23) and
an elastomeric profile weatherstrip (10) comprising a fastener section (11) and a sealing section (12),
said profile weatherstrip (10) being secured in the region of said fastener section (11) to said sunroof panel (20) and contactable with said flange (30) in the region of said sealing section (12),
said sealing section (12) forming a compressible hollow chamber (13),
said hollow chamber (13) being configured roughly square in cross-section when said sealing section (12) is contacting said flange (30), and is conformable in the nature of a parallelogram when said sunroof panel (20) is moved relative in vertical direction to said flange (30),
said web (18, 23) being arranged for partly covering said sealing section (12) to extend into the gap (40) between said flange (30) and said sunroof panel (20),
said web (18, 23) being separated from said hollow chamber (13) by a spacing (b), enabling an unobstructed deformation of said hollow chamber (13) and
designed frangible locations (17) being developed at the inner surface of said hollow chamber (13) at the transition between said sealing section (12) and said fastener section (11) which support the deformation of the hollow chamber (13) when said sunroof panel (20) is moved relative in vertical direction to said flange (30).

2. The weatherstrip assembly as set forth in claim 1, **characterized in that** said sealing section (12) is nearly fully covered by said web (18, 23).

3. The weatherstrip assembly as set forth in claim 1 or 2, **characterized in that** said web (18) is configured on said profile weatherstrip (10).

4. The weatherstrip assembly as set forth in claim 1 or 2, **characterized in that** said web (23) is configured on said sunroof panel (20).

5. The weatherstrip assembly as set forth in claim 4, **characterized in that** said web (23) is made of plastics and is preferably provided with a reinforcement (24).

6. The weatherstrip assembly as set forth in any of the claims 1 to 5, **characterized in that** said sealing section (12) is provided at an outer surface (14) facing said flange (30) with a coating to increase friction.

7. The weatherstrip assembly as set forth in any of the claims 1 to 6, **characterized in that** said web (18, 23) is provided at an outer surface (19, 25) facing said flange (30) with a coating to reduce friction, preferably a spray lubricant.

8. The weatherstrip assembly as set forth in any of the claims 1 to 7, **characterized in that** a spacing (a) between said web (18, 23) and said flange (30) can be dimensioned so that contact between web (18, 23) and flange (30) is avoided when moved relative to each other.

9. The weatherstrip assembly as set forth in any of the claims 1 to 8, **characterized in that** said fastener section (11) has a hardness higher than that of said sealing section (12).

10. The weatherstrip assembly as set forth in claim 9, **characterized in that** said sealing section (12) is made of sponge rubber, whereas said fastener section (11) is made of polyamide, polypropylene, polyvinylchloride or ethylene propylene diene monomer.

11. The weatherstrip assembly as set forth in any of the claims 1 to 10, **characterized in that** said fastener section (11) is secured to said sunroof panel (20) by a material-positive connection, preferably by adhesive bonding, and/or positively, preferably by interlocking.

## Revendications

1. Dispositif d'étanchement pour étancher une fente (40) entre un couvercle coulissant mobile (20) et une bride (30) entourant au moins par régions le couvercle coulissant (20) dans la région du toit d'un véhicule automobile, comprenant:
un couvercle coulissant mobile (20),
une bride (30) entourant au moins par régions le couvercle coulissant (20) dans la région du toit d'un véhicule automobile,
une barrette (18, 23) et
un profil d'étanchement (10) fabriqué en un matériau élastique et présentant un tronçon de fixation (11) et un tronçon d'étanchement (12),
dans lequel le profil d'étanchement (10) est fixé sur le couvercle coulissant (20) dans la région du tronçon de fixation (11) et peut être appliqué contre la bride (30) dans la région du tronçon d'étanchement (12)
dans lequel une chambre creuse compressible (13) est réalisée à travers le tronçon d'étanchement (12),
dans lequel la chambre creuse (13) est réalisée avec une section transversale approximativement en forme de quadrilatère dans un état dans lequel le tronçon d'étanchement (12) est appliqué contre la bride (30), et peut être déformée à la manière d'un parallélogramme pendant un mouvement relatif en direction verticale du couvercle coulissant (20) et de la bride (30),
dans lequel la barrette (18, 23) est agencée pour recouvrir au moins partiellement le tronçon d'étanchement (12) en s'étendant dans la fente (40) entre la bride (30) et le couvercle coulissant (20),
dans lequel la barrette (18, 23) est séparée de la chambre creuse (13) à travers une distance (b) permettant une déformation non obstrué de la chambre creuse (13) et
dans lequel des emplacements destinés au pliage (17) sont réalisés à la surface intérieure de la chambre creuse (13) à la transition entre le tronçon d'étanchement (12) et le tronçon de fixation (11) qui soutiennent la déformation de la chambre creuse (13) pendant un mouvement relatif en direction verticale du couvercle coulissant (20) et de la bride (30).

2. Dispositif d'étanchement selon la revendication 1, **caractérisé en ce que** le tronçon d'étanchement (12) est presque entièrement recouvert par la barrette (18, 23).

3. Dispositif d'étanchement selon l'une ou l'autre des revendications 1 et 2, **caractérisé en ce que** la barrette (18) est réalisée sur le profil d'étanchement (10).

4. Dispositif d'étanchement selon l'une ou l'autre des revendications 1 et 2, **caractérisé en ce que** la barrette (23) est réalisée sur le couvercle coulissant (20).

5. Dispositif d'étanchement selon la revendication 4, **caractérisé en ce que** la barrette (23) est fabriquée en matière plastique et est munie de préférence d'une armature (24).

6. Dispositif d'étanchement selon l'une des revendications 1 à 5, **caractérisé en ce que** le tronçon d'étanchement (12) est muni d'un revêtement qui augmente la friction sur une surface extérieure (14) tournée vers la bride (30).

7. Dispositif d'étanchement selon l'une des revendications 1 à 6, **caractérisé en ce que** la barrette (18, 23) est munie d'un revêtement qui diminue la friction, de préférence une laque favorisant le glissement, sur une surface extérieure (19, 25) tournée vers la bride (30).

8. Dispositif d'étanchement selon l'une des revendications 1 à 7, **caractérisé en ce que** la distance (a) entre la barrette (18, 23) et la bride (30) est dimensionnée de telle manière qu'un contact de la barrette (18, 23) et de la bride (30) est exclu pendant un mouvement relatif de celles-ci.

9. Dispositif d'étanchement selon l'une des revendications 1 à 8, **caractérisé en ce que** le tronçon de fixation (11) présente une plus grande dureté que le tronçon d'étanchement (12).

10. Dispositif d'étanchement selon la revendication 9, **caractérisé en ce que** le tronçon d'étanchement (12) est fabriqué à partir de caoutchouc mousse et le tronçon de fixation (11) est fabriqué à partir de polyamide, de polypropylène, de chlorure de polyvinyle ou de caoutchouc éthylène-polypropylène.

11. Dispositif d'étanchement selon l'une des revendications 1 à 10, **caractérisé en ce que** le tronçon de fixation (11) est fixé sur le couvercle coulissant (20) par coopération de matières, de préférence au moyen de colle, et/ou par coopération de forces, de préférence au moyen d'un enclenchement.
